# EUROPEAN PATENT SPECIFICATION

(11) **EP 4 508 138 B1**
(45) Date of publication and mention of the grant of the patent: **31.12.2025**
(21) Application number: 23814215.2
(22) Date of filing: 30.11.2023
(51) Int. Cl.: C08L 25/12, C08L 55/02, C08L 25/08, C23C 18/20, C25D 3/56

(54) **THERMOPLASTIC COMPOSITION FOR METAL PLATING**
THERMOPLASTISCHE ZUSAMMENSETZUNG ZUR METALLPLATTIERUNG
COMPOSITION THERMOPLASTIQUE POUR LE PLACAGE DE MÉTAL

(30) Priority: 02.12.2022 EP 22211168
(43) Date of publication of application: 19.02.2025
(73) Proprietor: SABIC Global Technologies B.V., 4612 PX Bergen op Zoom (NL)
(72) Inventor: TEVTIA, Amit Kumar, Bangalore 562125 (IN); MOIDEEN, Mohamed Ashraf, Bengaluru 562125 (IN); ANANTHARAMAN, Dhanabalan, Bengaluru 562125 (IN); ABBAS, Sara Ali, Bangalore 562125 (IN)
(74) Representative: Fish & Richardson P.C.
(86) International application number: PCT/EP2023/083673
(87) International publication number: WO 2024/115634

(56) References cited:
- EP-A1- 0 523 163
- WO-A1-2019/132388
- WO-A1-2022/194814
- CN-A- 101 845 188
- CN-A- 111 875 897

## Description

### CROSS REFERENCE TO RELATED APPLICATIONS

This application claims priority to and the benefit of the filing date of European Patent Application No. 22211168.4, filed December 02, 2022.

### FIELD

The present disclosure relates to a thermoplastic composition for metal plating and an electroplating process using the same.

### BACKGROUND

Polymeric plastic parts prepared from thermoplastic compositions, such as an acrylonitrile-butadiene-styrene (ABS) polymer, are often metalized when used for certain applications such as automotive applications. The thermoplastic composition functions as a polymeric substrate on which a metal coating can be deposited. For example, polymeric plastic parts prepared from an ABS polymer can be coated with a metal layer in order to impart a mirror finish look to resemble a metal part while retaining the distinct advantage of being lightweight. In addition, metal coatings can improve the mechanical strength, thermal stability, and chemical resistance of the underlying polymeric substrate on which the metal is coated. In this regard, ABS polymers are particularly useful for automotive and other industrial applications because of their desirable impact properties and other useful features.

However, there are some problems with the use of metal coatings on polymeric plastic parts. Metal coatings do not easily bond or adhere to most polymer based substrates unless the surfaces of such polymeric substrates are first chemically treated. Conventionally, a surface of a polymeric substrate can be chemically etched with oxidizing reagents such as hexavalent chromium trioxide or a mixture of chromic/sulfuric acids or chromic/sulfuric/phosphoric acids. These strong oxidizing agents can micro-roughen and chemically alter the surface of the polymeric substrate by forming polar organic functional groups such as R-COOH, R-OH, R-SO3 and R-CH=O at the surface of the substrate. The presence of these polar groups can promote adsorption of plating catalysts from aqueous solutions that allow subsequent metal deposition to occur during the plating process. After the etching process, the surface of the polymeric substrate can be metal plated. One suitable metric to measure the success of bonding between the metal layer and the polymer substrate is the peel strength, where greater peel strength correlates to better adherence of the metal on the polymer substrate.

However, the use of hexavalent chromium compounds such as chromium trioxide pose certain risks and challenges such as (1) health risks because such compounds are carcinogenic, (2) effective disposal of waste effluents derived from the etching process, which render such etching process not only environmentally hazardous but also expensive, (3) purification of the etched plastic parts to remove any residual chromium trioxide that may be present as impurities as such impurities adversely affect the metal plating process, and/or (4) the use of highly oxidizing acid solution may often damage the polymeric substrate itself or render it structurally weak for metal plating.

In an effort to avoid these problems, many alternative processes to chromic acid etching have been investigated. For example, a dry plasma etching process was proposed as an alternative for the wet etching process. However, application of this method is limited to flat polymeric parts. Altematively, etching reagents such as potassium permanganate have been used in an attempt to replace chromic acid. Although, the use of heated alkaline permanganate solutions has seen some limited commercial success, owing to its slower oxidizing rate compared to chromic acid, applicability of permanganate solutions has mostly been limited. It is commercially desirable to obtain as a strong a bond as possible between a surface of a thermoplastic article and an electroless metal deposited thereon in order to enable facile electroplating.

CN 111 875 897 A discloses a high-temperature-resistant electroplating-grade ABS resin and a preparation method thereof, and discloses blends for electroplating comprising ABS, SAN and SMA. WO 2022/194814 A1 discloses an ABS molding composition with an improved surface quality. CN 101 845 188 discloses a glass fiber reinforced styrene maleic anhydride copolymer compound and a preparation method thereof.

### SUMMARY

Illustrative embodiments of the present disclosure are directed to a thermoplastic composition for metal plating. According to claim 1, a thermoplastic composition comprises a first copolymer in an amount from 30% - 80% by weight of the composition, wherein the first copolymer includes polymeric units derived from a vinyl aromatic monomer and a vinyl nitrile monomer; a rubber modified polymer in an amount of 18% - 50% by weight of the composition, wherein the rubber modified polymer includes a polymeric rubber with polymeric units derived from a conjugated diene and a grafted thermoplastic copolymer grafted to the polymeric rubber; and a styrene maleic anhydride (SMA) copolymer in an amount from 2% - 15 % by weight of the composition, wherein the SMA copolymer includes a maleic anhydride content in an amount from 10% - 30% by weight of the SMA copolymer and the SMA copolymer comprises a weight average molecular weight from 5,000 g/mol to 30,000 g/mol, when measured in accordance with gel permeation chromatography in accordance with ASTM D5296-11 using polystyrene based calibration with tetrahydrofuran (THF) as solvent.

In some embodiments, the vinyl aromatic monomer includes at least one of styrene, α-methyl styrene, dibromostyrene, vinyltoluene, vinylxylene, butylstyrene, p-hydroxystyrene, and methoxystyrene (preferably the vinyl aromatic monomer is styrene) and the vinyl nitrile monomer includes at least one of acrylonitrile, chloroacrylonitrile, methacrylonitrile, and ethacrylonitrile (preferably the vinyl nitrile monomer is acrylonitrile).

In the present invention, the rubber modified polymer includes a polymeric rubber with polymeric units derived from a conjugated diene and the rubber modified polymer also includes a grafted thermoplastic copolymer grafted to the polymeric rubber.

As recited in claim 1, the rubber modified polymer includes a polymeric rubber with polymeric units derived from a conjugated diene. The conjugated diene may include at least one of 1,3-butadiene, isoprene, 1,3-heptadiene, methyl-1,3-pentadiene, 2,3-dimethyl-1,3-butadiene, 2-ethyl-1,3-pentadiene, 1,3-hexadiene, and 2,4-hexadiene (preferably 1,3-butadiene). As recited in claim 1, the rubber modified polymer also includes a grafted thermoplastic copolymer grafted to the polymeric rubber. The grafting thermoplastic copolymer may include polymeric units derived from a vinyl aromatic monomer (preferably styrene) and a vinyl nitrile monomer (preferably acrylonitrile).

In some embodiments, the first copolymer includes a styrene-acrylonitrile copolymer (SAN) and the rubber modified polymer includes a SAN grafted butadiene rubber. In some embodiments, the thermoplastic composition further includes an ethylene acrylic acid (EAA) copolymer in an amount from 2% - 10% by weight of the composition. The EAA copolymer includes acrylic acid content in an amount from 1% - 10% by weight of the EAA copolymer, preferably from 5% - 7% by weight of the EAA copolymer.

In some embodiments, the thermoplastic composition includes one or more further components in an amount from 0% - 5% by weight of the composition.

In some embodiments, the one or more further components in the thermoplastic composition are selected from the group consisting of an impact modifier, a flow modifier, a reinforcing agent, an antioxidant, a heat stabilizer, a light stabilizer, an ultraviolet light stabilizer, an ultraviolet absorbing additive, a plasticizer, a lubricant, a releasing agent, an antistatic agent, melt processing additive, and any combination thereof.

In some embodiment, the one or more further components includes at least one of magnesium oxide (MgO), silicone fluid, ethylene bis stearamide (EBX) wax, and magnesium stearate.

In some embodiments, the thermoplastic composition has a Notched Izod Impact strength of 3.0 kJ/m2 to 30.0 kJ/m2, preferably 4.0 kJ/m2 to 25.0 kJ/m2, more preferably 5.0 kJ/m2 to 20.0 kJ/m2, when measured in accordance with ISO 180/1A.

Various embodiments of the present disclosure are directed to an electroplating process that includes molding a thermoplastic composition to form a molded article and thereafter depositing metal on the molded article to produce a metal plated molded article having a high peel strength and good impact properties. According to claim 10, the method comprises (i) molding the thermoplastic composition into a molded article, (ii) optionally cleaning and/or rinsing the molded article; (iii) contacting a surface of the molded article with a chemical agent to form a surface treated article; and (iv) subjecting the surface treated article to conditions suitable to adhere one or more metal layers to at least a portion of a surface of the surface treated article to produce a metal plated molded article.

**In** some embodiments, the chemical agent includes a suspension of manganese oxide colloidal particles in a mineral acid mixture comprising sulfuric acid and/or phosphoric acid.

**In** some embodiments, the one or more metal layers are selected from the group consisting of copper, nickel, and chromium (preferably nickel).

**In** some embodiments, the metal plated molded article has a peel strength determined in accordance with ASTM B533-85 of greater than 0.4 N/mm.

Further embodiments of the present disclosure are directed to a thermoplastic composition to be used for preparing metal plated articles suitable for various industrial applications that desire materials to have excellent impact strength. Also, and in one aspect, the thermoplastic composition of the present disclosure can be coated with metal without having to use chemical etching processes that rely on oxidizing reagents such as hexavalent chromium trioxide or a mixture of chromic/sulfuric acids or chromic/sulfuric/phosphoric acids.

Illustrative embodiments of the present disclosure are also directed to a metal plated article that includes a metal layer and a thermoplastic article formed by the thermoplastic composition of present invention. According to claim 14, the metal layer is adhered onto at least a portion of a surface of the thermoplastic article, wherein the thermoplastic article comprises a copolymer in an amount from 30% - 80% by weight of the composition, and wherein the copolymer includes polymeric units derived from a vinyl aromatic monomer and a vinyl nitrile monomer, and wherein the thermoplastic article further comprises a rubber modified polymer in an amount of 18% - 50% by weight of the composition and a styrene maleic anhydride (SMA) copolymer in an amount from 2% - 15 % by weight of the composition, and wherein the SMA copolymer comprises a maleic anhydride content in an amount from 10% - 30% by weight of the SMA copolymer and the SMA copolymer comprises a weight average molecular weight from 5,000 g/mol to 30,000 g/mol, when measured in accordance with gel permeation chromatography in accordance with ASTM D5296-11 using polystyrene based calibration with tetrahydrofuran (THF) as solvent.

In some embodiments, the metal plated article is an automotive or electrical part.

### BRIEF DESCRIPTION OF THE DRAWINGS

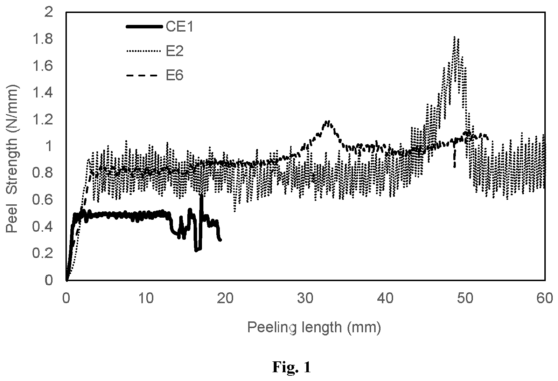

The above and other features, aspects and advantages of the present disclosure are better understood when the following detailed description of the disclosure is read with reference to the accompanying drawings, in which: FIG. 1 shows a plot of peel force (in N/mm) vs. peeling length (in mm) for Examples E2 and E6 and Comparative Example CE1 in accordance with various embodiments of the present disclosure.

### DETAILED DESCRIPTION

Illustrative embodiments of the present disclosure are directed to a thermoplastic composition. According to claim 1, the thermoplastic composition comprises a first copolymer in an amount from 30% - 80% by weight of the composition, wherein the copolymer comprises polymeric units derived from a vinyl aromatic monomer and a vinyl nitrile monomer, and wherein the thermoplastic composition further comprises a rubber modified polymer in an amount of 18% - 50% by weight of the composition, wherein the rubber modified polymer includes a polymeric rubber with polymeric units derived from a conjugated diene and a grafted thermoplastic copolymer grafted to the polymeric rubber, and a styrene maleic anhydride (SMA) copolymer in an amount from 2% - 15 % by weight of the composition, wherein the SMA copolymer includes a maleic anhydride content in an amount from 10% - 30% by weight of the SMA copolymer and the SMA copolymer comprises a weight average molecular weight from 5,000 g/mol to 30,000 g/mol, when measured in accordance with gel permeation chromatography in accordance with ASTM D5296-11 using polystyrene based calibration with tetrahydrofuran (THF) as solvent. Without intending to be bound by theory, the present inventors believe that the incorporation of SMA into ABS leads to polar anchor groups being present at a surface of a molded article (which includes the thermoplastic composition of the present disclosure). The presence of maleic anhydride groups in SMA increases surface energy and surface polarity at the surface of the molded article. These increases lead to better interfacial adhesion between ABS and a metal to be bonded to the surface of the molded article, thereby enabling facile metallization. Details of various embodiments are discussed below.

### Thermoplastic Composition

The thermoplastic composition described herein includes a first copolymer in an amount from 30% - 80% by weight of the composition, preferably from 45% - 75% by weight of the composition. The first copolymer comprises polymeric units derived from a vinyl aromatic monomer and a vinyl nitrile monomer. The thermoplastic composition also comprises a rubber modified polymer in an amount of 18% - 50% by weight of the composition, preferably from 30% - 45% by weight of the composition. The thermoplastic composition also includes a styrene maleic anhydride (SMA) copolymer in an amount from 2% - 15 % by weight of the composition. The SMA copolymer comprises a maleic anhydride content in an amount from 10% - 30% by weight of the SMA copolymer, preferably from 12% - 25% by weight of the SMA copolymer, more preferably from 15% - 20% by weight of the SMA copolymer. The SMA copolymer comprises a weight average molecular weight from 5,000 g/mol to 30,000 g/mol, preferably from 10,000 g/mol to 25,000 g/mol, more preferably from 15,000 g/mol to 20,000 g/mol.

The thermoplastic composition can be molded or formed into a polymeric article. The polymeric article can have a suitable impact property necessary for certain applications including door handles, holders, lamp bodies, corporate logos, and other decorative components used in the automotive industry, household appliance, electronics, furniture, sanitary fittings and others. For example, the polymeric article can have a Notched Izod Impact strength of ≥ 3.0 kJ/m², preferably 4.0 kJ/m² to 25.0 kJ/m², more preferably from 5.0 kJ/m² to 20.0 kJ/m², when measured in accordance with ISO 180/1A.

### Copolymer (A)

The thermoplastic composition described herein comprises a copolymer which includes polymeric units derived from a vinyl aromatic monomer and a vinyl nitrile monomer. Based on the total weight of the thermoplastic composition, the first copolymer is present in an amount from 30% to 80% by weight of the thermoplastic composition, preferably from 45% to 75% by weight of the thermoplastic composition, or any range or value there between.

Non-limiting example of vinyl aromatic monomers include styrene, α-methyl styrene, dibromostyrene, vinyltoluene, vinylxylene, butylstyrene, p-hydroxystyrene, methoxystyrene, or any combination thereof. Non-limiting examples of vinyl nitrile monomers include acrylonitrile, alpha-chloro acrylonitrile, methacrylonitrile, ethacrylonitrile, or any combination thereof. In one embodiment, the vinyl aromatic monomer is styrene and the vinyl nitrile monomer is acrylonitrile. Preferably, the copolymer is styrene acrylonitrile (SAN) copolymer. In preferred aspects of the disclosure, the copolymer may be styrene acrylonitrile copolymer having greater than or equal to 30.0% by weight and less than or equal to 35.0% by weight of polymeric units derived from acrylonitrile.

In some aspects of the disclosure, the copolymer can be a terpolymer comprising polymeric units derived from (i) a vinyl aromatic monomer, (ii) a vinyl nitrile monomer, and (iii) (meth)acrylic monomers. The vinyl aromatic monomer and the vinyl nitrile monomer can be selected from monomers as defined above. Non-limiting examples of (meth)acrylic monomers can include methyl methacrylate, ethyl methacrylate, propyl methacrylate, iso-propyl methacrylate, butyl methacrylate, hexyl methacrylate, and decyl methacrylate. Preferably, the (meth) acrylic monomer may be methyl methacrylate (MMA). Accordingly, the copolymer can be a terpolymer that includes polymeric units derived from styrene/acrylonitrile/methylmethacrylate or from alpha-methylstyrene/acrylonitrile/methyl methacrylate.

The copolymer can have a suitable molecular weight and melt flow rate. A weight average molecular weight (Mw) of the copolymer can be from 50,000 g/mol to 100,000 g/mol or any range or value there between, as determined in accordance with gel permeation chromatography in accordance with ASTM D5296-11 using polystyrene based calibration with tetrahydrofuran (THF) as solvent.

The melt flow rate of the copolymer can be from 7.0 g/10 min to 40.0 g/10 min or any value or range there between as determined at 230 °C at 3.8 kg load in accordance with ASTM D1238. If the melt flow rate of the copolymer is above these rates, the overall impact property of the thermoplastic composition can be adversely affected whereas if the melt flow rate of the copolymer is below these rates, the desired flow property of the thermoplastic polymer is not attained, affecting the melt-processability of the thermoplastic polymer.

### Rubber modified polymer (B)

The thermoplastic composition described herein comprises a rubber modified polymer in an amount of 18% - 50% by weight of the composition, or any range or value there between. The rubber modified polymer can be referred to as high rubber graft or "HRG". The thermoplastic composition can include at least 26.0 by weight of the rubber modified polymer. In some aspects, the thermoplastic composition can include the rubber modified polymer present in an amount from 20.0 by weight to 50.0 by weight or any range or value there between, with regard to the total weight of the thermoplastic composition.

The rubber modified polymer, can include a suitable amount of the polymeric rubber, preferably from 55.0 by weight to 75.0 by weight with regard to the total weight of the rubber modified polymer. As recited in claim 1, the polymeric rubber can include polymeric units derived from a conjugated diene. Non-limiting examples of the conjugated diene include 1,3-butadiene, isoprene, 1,3-heptadiene, methyl- 1,3-pentadiene, 2,3-dimethyl-1,3-butadiene, 2-ethyl-1,3-pentadiene, 1,3-hexadiene, 2,4-hexadiene, and any combination thereof. Preferably, the conjugated diene is 1,3-butadiene and the polymeric rubber can be polybutadiene.

In a preferred aspect of the present disclosure, the rubber modified polymer comprises a polymeric rubber comprising polymeric units derived from 1,3-butadiene and a grafted thermoplastic copolymer grafted to the polymeric rubber. The grafting thermoplastic copolymer comprises polymeric units derived from a vinyl aromatic monomer, preferably styrene, and a vinyl nitrile monomer, preferably acrylonitrile. Most preferably the rubber modified polymer is acrylonitrile butadiene styrene (ABS).

### Styrene Maleic Anhydride Copolymer, SMA (C)

The thermoplastic composition described herein comprises a styrene maleic anhydride (SMA) copolymer in an amount from 2% - 15% by weight of the composition, preferably from 5% - 20% by weight of the composition, more preferably from 10% - 15% by weight of the composition. The SMA copolymer comprises of styrene and maleic anhydride monomers. The SMA copolymer includes a maleic anhydride content in an amount from 10% - 30% by weight of the SMA copolymer, preferably from 12% - 25% by weight of the SMA copolymer, more preferably from 15% - 20% by weight of the SMA copolymer. In various embodiments, the SMA copolymer comprises a weight average molecular weight from 5,000 g/mol to 30,000 g/mol, preferably from 10,000 g/mol to 25,000 g/mol, more preferably from 15,000 g/mol to 20,000 g/mol, if the weight average molecular weight is measured in accordance with gel permeation chromatography in accordance with ASTM D5296-11 using polystyrene based calibration with tetrahydrofuran (THF) as solvent.

In general, SMAs are produced by reacting maleic anhydride with styrene at high temperatures in the presence of peroxide catalysts as shown in, for example, U.S. Patent No. 2,866,771, U.S. Patent No. 2,971,939, and the references cited therein. The copolymers can also be used instead of styrene such as methylstyrene, 2,4-Dimethylstyrene, chlorostyrenes and other substituted styrenes. The weight average molecular weight of the SMA copolymer is from about 5,000 g/mol to 30,000 g/mol, preferably from 10,000 g/mol to 25,000 g/mol, more preferably from 15,000 g/mol to 20,000 g/mol. A representative structure for SMA is shown in Scheme IA.

The thermoplastic composition may further comprises 2% - 10 % by weight of an ethylene acrylic acid (EAA) copolymer. The EAA copolymer can include 1% by weight to 10% by weight, preferably from 5% by weight to 7% by weight of acrylic acid, based on the total weight of the EAA copolymer. A representative structure for EAA is shown in Scheme I(B), where x = 160 to 800 and y = 4.8 to 35.

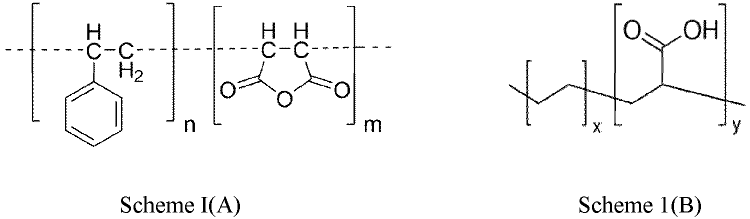

### Further Components (D)

The thermoplastic composition described herein can include one or more further components depending on the application and use. For example, the thermoplastic composition can include an amount of further component(s) from 0% to 5% by weight, preferably from 0% to 3% by weight based on the total weight of the thermoplastic composition.

Non-limiting examples of one or more further components that can be used include an impact modifier, a flow modifier, a reinforcing agent, an antioxidant, a heat stabilizer, a light stabilizer, an ultraviolet light stabilizer, an ultraviolet absorbing additive, a plasticizer, a lubricant, a releasing agent, an antistatic agent, melt processing additives, or any combination thereof.

The further component preferably comprises at least one melt processing additive. The melt processing additive may include magnesium oxide (MgO), silicone oil, ethylene bis(stearamide) wax (EBS wax), magnesium stearate, and combinations thereof. The melt processing additive(s) may be present in an amount from 0% by weight to 5% by weight, preferably from 1% by weight to 3% by weight based on the total weight of the thermoplastic composition.

### Thermoplastic Composition

The combination of specific types and amounts of materials constituting the thermoplastic composition described herein result in advantageous property profiles for impact performance and peel strength. The examples and comparative examples disclosed herein provide the skilled person with materials that fall inside and outside the scope of the disclosure and thereby constitute a basis for the development of further embodiments according to the disclosure.

For the avoidance of doubt the skilled person will understand that the total weight of the composition will be 100% by weight and that any combination of materials which would not form 100 by weight in total is unrealistic and not according to the disclosure.

In accordance with some embodiments of the disclosure, the thermoplastic composition is selected to have a notched Izod impact resistance determined in accordance with ISO 180/1A at a temperature of 23°C of 3.0 kJ/m² to 30.0 kJ/m², preferably 4.0 kJ/m² to 25.0 kJ/m², more preferably 5.0 kJ/m² to 20.0 kJ/m²

Preferred ranges for the amount of the components and preferred ranges for the properties of the composition may be combined without limitation provided of course these fall within the ambit of the scope of the disclosure as defined herein in its broadest form. That is to say, a preferred range for one or more of the amounts and/or types of the components constituting the thermoplastic composition may be combined with a preferred range for one or more of the properties of the thermoplastic composition and all such combinations are considered as disclosed herein.

The compositions can be manufactured by various methods known in the art. For example, the first copolymer, the rubber modified polymer, SMA and other additives are first blended, in a high-speed mixer or by hand mixing. The blend is then fed into the throat of a twin-screw extruder via a hopper. Alternatively, at least one of the components can be incorporated into the composition by feeding it directly into the extruder at the throat and/or downstream through a side feeder, or by being compounded into a masterbatch with a desired polymer and fed into the extruder. For example, compositions can be prepared using a Krupp Werner & Pfleiderer ZSK2 co-rotating intermeshing 10-barrel twin screw extruder of diameter 25mm and L/D ratio of 41. The temperature in the extruder may be from 180 °C - 265 °C along the screw length. The extrudate can be immediately cooled in a water bath and pelletized. The pellets so prepared can be 0.6 cm in length or less as desired. Such pellets can be used for subsequent molding, shaping, or forming. The extruded form can be subjected to conditions suitable to produce a molded thermoplastic article. For example, thermoplastic pellets of the present disclosure can be injected molded into bars, sheets, or a form.

### Electroplating Process

One further subject of the disclosure is the use of the inventive polymer blend for electroplating. According to claim 10, the present invention provides a metal plated molded article comprising the aforementioned inventive thermoplastic composition, wherein the surface of the molded article is at least partially or preferably totally coated with one or more metal layers (e.g., electroplated metal). The metal plated molded article is obtainable by usual processes for metal plating of thermoplastic composition such as
(i) a conventional electroplating process or (ii) a direct plating process. Such processes have been already described and are known in the art. According to claim 11, an electroplating process in accordance with the disclosure comprises the following steps:
   i. molding the thermoplastic composition as described herein into a molded article,
   ii. optionally cleaning and/or rinsing the molded article,
   iii. contacting a surface of the molded article with a chemical agent to form a surface treated article, and
   iv. subjecting the surface treated article to conditions suitable to adhere one or more metal layers to at least a portion of the surface of the surface treated article to produce a metal plated molded article.

**In** some aspects of the disclosure, the molded article prepared from the thermoplastic composition of the present disclosure can be surface treated. Surface treatment can include contacting at least a portion of the thermoplastic composition (e.g., a molded thermoplastic composition) of the present disclosure with a chemical reagent for a sufficient time period (e.g., from 5.0 minutes to 30.0 minutes, preferably from 10.0 minutes to 20.0 minutes) to form the surface treated thermoplastic composition. Contact temperature can range from 60 °C to 80 °C, preferably from 65.0 °C to 75.0 °C. The surface treated polymeric article can have suitable surface polarity while retaining the desired impact strength. The attributes of surface polarity and impact strength can be attributed to a purposeful combination of a suitable polymeric article, a suitable selection of chemical reagent, and suitable process parameters of temperature and time period of contact/exposure.

Advantageously, in some embodiments, the surface treated article can be produced without the use of hexavalent chromium compounds thereby avoiding drawbacks associated with conventional etching process that use hexavalent chromium compounds. The article can be contacted with the chemical reagent for a suitable period of time in order to ensure the desired surface roughness is incorporated. For example, if the time period of contacting the article with the chemical reagent is too high (e.g., greater than 30 min), the surface of the article can be damaged. If the time period of contacting the article with the chemical reagent is too short (e.g., less than 5 minutes), the surface morphology of the article is not sufficiently altered to enable the adhesion of the surface treated article to a metal layer. The chemical reagent can be a suspension of a sulfuric acid solution (70.0 vol.%), manganese oxide colloidal particles suspended in a mineral acid mixture, potassium permanganate solution (6.5 vol.%), or any combination thereof. In some aspects, the chemical reagent can be a colloidal suspension that includes manganese oxide colloidal particles suspended in a mineral acid mixture of sulfuric acid and phosphoric acid. For example for a 1 liter solution, the manganese oxide colloidal particles can be present in an amount from 50.0 g/l to 70.0 g/l, the phosphoric acid can be present in an amount from 210.0 ml/l to 230.0 ml/l and the sulfuric acid can be present in an amount from 560.0 ml/l to 580.0 ml/l. The chemical reagent can include sulfuric acid (H₂SO₄) having a molar strength between 8.0 M to 14.0 M and/or phosphoric acid having molar strength between 2.0 M to 6.0 M. The surface treated article of illustrative embodiments of the present disclosure can retain advantageous impact properties even after the surface treatment with the chemical reagent.

In an aspect of the present disclosure, the surface treated article of the present disclosure can be metal plated by subjecting the article to conditions suitable to adhere one or more metal layers to at least a portion of the treated surface to form a metal plated molded article. The metal plating can be done by known metal plating techniques. For example, a combination of chemical plating and electroplating can be used herein. In one aspect, the surface treated article can be subjected to the chemical treatment to produce a metal plated precursor material. The metal plated precursor article can be contacted with a metal electrolyte solution at any applied electrical current (e.g., ≥ 1.0 Amps and ≤ 4.0 Amps, and for a time period of ≥ 5 minutes and ≤ 30 minutes) to produce the metal plated molded article.

The one or more metal layers are selected from the group consisting of copper, nickel, and chromium, preferably nickel. In accordance with the disclosure, at least a part of the surface of the molded article is coated with one or more metal layers. The thickness of a single layer may be in between 0.1 to 50 µm. The metal plated molded article may have a peel strength determined in accordance with ASTM B533-85 of greater than 0.4 N/mm, preferably from 0.5 N/mm to 2.0 N/mm, more preferably from 0.6 N/mm to 1.5 N/mm.

In some embodiments, the metal plated molded article is incorporated into a housing component of an electrical or a consumer electronic device or an automotive bezel or reflector. It can also be used in door handles, holders, lamp bodies, corporate logos and many other decorative components used in the automotive industry, household appliances, electronics, furniture, sanitary fittings, and the like. In one aspect, the metal plated molded article is used in automotive applications and, in particular, exterior applications such as automotive front grilles and wheel covers.

The metal plated article molded from the thermoplastic composition of the present disclosure shows an improved adhesion between the metal layer and the plastic material. Furthermore the thermal cycling adherence is improved and the mechanical properties are excellent.

### EXAMPLES

The present disclosure will now be described using the following non-limiting examples to demonstrate the practice and advantages thereof. It is understood that the examples are given by way of illustration and are not intended to limit the specification of the claims to follow in any manner.

### Preparation of thermoplastic compositions of the present disclosure and comparative thermoplastic compositions.

All formulations were prepared on a 4 Kg scale. The components of the compositions and their source are listed in Table 1 while the details of the formulations are listed in the Table 2.

**Table 1: Components of the compositions and their source.**

| **Component** | **Trade name/Supplier** |
|---|---|
| HRG | CYCOLAC^{™} INP 362, available from SABIC (rubber content ~ 62%) |
| SAN1 | INP 581 SAN, available from SABIC (~ 25% acrylonitrile content) |
| SAN2 | 55556 SAN, available from SABIC (~ 34% acrylonitrile content) |
| SMA1 | XIBOND 280, available from Polyscope polymers BV (~32% maleic anhydride content, 5K g/mole, by GPC) |
| SMA2 | XIBOND 220, available from Polyscope polymers BV (~18% maleic anhydride content, 15K g/mole, by GPC) |
| Mg Oxide | Available from Martin Marietta Magnesia Specialties |
| Silicone Fluid | Available from DOW chemical company |
| EBS Wax | Available from PMC Biogenix, Inc. |
| Mg Stearate | Available from Valtris Specialty Chemicals |

While a mixture of SAN pellets (A) and SMA (C) was added through a main hopper/feeder, a pre-blend of butadiene rubber (rubber modified thermoplastic polymer (B)) along with the melt processing additives of EBX wax, magnesium stearate, magnesium oxide, and silicone fluid) was fed through a side feeder connected to a second barrel (refer to Table 3). Comparative Example CE1 was prepared by mixing equal amounts of both SAN1 and SAN2 (copolymer (A)) without any SMA. Comparative Examples CE2 and CE3 and the Example thermoplastic compositions of the present disclosure (E1 to E11) were prepared in the same manner as the comparative samples, but before loading to the main hopper, the pellets of SMA (C) and the mixture of SANs were pre-mixed together in a plastic container to produce homogeneously mixed pellets. Similarly, a pre-blend in the form a homogeneous powder was obtained by dry-blending HRG and the melt processing additives in a separate plastic container. Melt processing additives (MPA) were provided in an amount of: MgO (0.04%), Silicone fluid (0.2%), EBX wax (1%), Mg-Stearate (0.3%) for all the formulations.

**Table 2: Formulations of the thermoplastic compositions.**

| **Sample #** | **HRG** | **SAN1** | **SAN2** | **SMA1** | **SMA2** | **MPA** | **Total** |
|---|---|---|---|---|---|---|---|
| | **(% by weight)** | **(% by weight)** | **(% by weight)** | **(% by weight)** | **(% by weight)** | **(% by weight)** | **(% by weight)** |
| CE1 | 24.28 | 37.09 | 37.09 | 0 | 0 | 1.54 | 100 |
| CE2 | 25 | 70.46 | 0 | 3 | 0 | 1.54 | 100 |
| CE3 | 25 | 63.46 | 0 | 10 | 0 | 1.54 | 100 |
| E1 | 25 | 70.46 | 0 | 0 | 3 | 1.54 | 100 |
| E2 | 40 | 48.46 | 0 | 0 | 10 | 1.54 | 100 |
| E3 | 25 | 0 | 63.46 | 0 | 10 | 1.54 | 100 |
| E4 | 40 | 0 | 52.46 | 0 | 6 | 1.54 | 100 |
| E5 | 25 | 63.46 | 0 | 0 | 10 | 1.54 | 100 |
| E6 | 32.5 | 62.96 | 0 | 0 | 3 | 1.54 | 100 |
| E7 | 32.5 | 59.96 | 0 | 0 | 6 | 1.54 | 100 |
| E8 | 25 | 0 | 70.46 | 0 | 3 | 1.54 | 100 |
| E9 | 25 | 0 | 63.46 | 0 | 10 | 1.54 | 100 |
| E10 | 40 | 0 | 55.46 | 0 | 3 | 1.54 | 100 |
| E11 | 40 | 0 | 48.46 | 0 | 10 | 1.54 | 100 |

The physically mixed formulations were melt blended in a 10-barrel Coperion ZSK-26 mm co-rotating twin-screw extruder having an L/D ratio of 40:1. The material throughput during extrusion was adjusted to maintain the specific mechanical energy (SME) between 0.172 and 0.185, while keeping the screw RPM at 250. Table 3 lists the temperature profile used during the extrusion of the formulations of the present disclosure.

**Table 3**

| Barrel | 1^{st} | 2^{nd} | 3^{rd} | 4^{th} | 5^{th} | 6^{th} | 7^{th} | 8^{th} | 9^{th} | 10^{th} |
|---|---|---|---|---|---|---|---|---|---|---|
| Temp °C | 170 | 204 | 225 | 230 | 240 | 240 | 240 | 240 | 240 | 245 |

Injection molding of test specimens such as ISO tensile bars, ISO impact bars, and 3 mm color plaques was carried out in an L&T Detech 100 Ton molding equipment fitted with a 32 mm diameter screw. Injection molding was conducted at a temperature of 240 °C and injection speed was maintained at 20 mm/sec. The molded plaques were kept for conditioning for 72 hours at 23 °C and 50% relative humidity (RH).

### Metal plating of molded plaques of a comparative thermoplastic composition and the thermoplastic compositions of the present disclosure.

### Chemical Plating Process:

A surface of each molded plaque was chemically plated by placing the plaque in a plating bath where metal ions in a plating bath were reduced and bound to the polar groups of polymeric plaques to form a metallic layer on the surface of the plaques. Before placing the plaques in the plating bath, all of the plaques (including the comparative and example thermoplastic compositions) were etched with hexachrome acid for 10 minutes at 70°C in a conventional manner. All the pretreated plaques were sensitized in SnCl₂ (10g/L)/ HCl (40 mL/L) solution and activated in PdCl₂ (0.25g/L) /HCl (2.5 mL/L) solution. The chemical plating bath contained CuSO₄.5H₂O (15 g/L), NaKC₄H₄O₆.4H₂O (30 g/L), HCHO (100 mL/L) and NaOH (4g/L). All the samples were chemically plated for 15 minutes. Coated plaques were tested for their sheet resistance and were electroplated using the process described below.

### Electroplating Process:

The electrodeposition experiment consisted of a copper deposition step and was carried out using a MiniContact RS Electroplating System. The electrolyte solution consisted of 75 g/L copper sulfate and 200 mL/L sulfuric acid. The applied current was 1.5 Amps and the temperature was 29 °C. The plating time for both the comparative thermoplastic composition and the example thermoplastic compositions of the present disclosure was 30 min.

The process conditions for electroplating were optimized with respect to the applied current and the treatment time. Further, a statistically significant trend is identified for the metal growth on the plaques of formulated thermoplastic compositions of the present disclosure. Furthermore, thickness of metal layer grown on the surface of the plaque appeared to increase when the treatment time was varied from 5 to 30 min.

The different parameters (current and time) need to be considered in order to have a finite control on the metal thickness during the electroplating. To compare the final peel strength of different samples, a constant metal thickness was necessary in order to make sure that the difference in the peel strength arose mainly due to the different adhesion process *i.e.* chemical versus mechanical. However, in these examples, the surface conductivity for every sample was different depending on the chemical plating step. Due to this, all the samples were cut into the same diameters to maintain the same surface area. The electroplating was conducted on the same day while maintaining pH, electrolyte concentration, applied current, treatment time and temperature unchanged.

### Peel testing of a comparative thermoplastic composition and the example thermoplastic compositions of the present disclosure.

Example thermoplastic compositions of the present disclosure (E1 to E11) and the comparative examples (CE1 to CE3) were metalized and tested for peel adhesion. Fig. 1 shows a plot of peel force (in N/mm) vs. peeling length (in mm) for CE, E2 and E6. The peeling length and peel strength for the Examples was found to be much higher as compared to Comparative Example CE1. Table 4 shows the average peel strength determined in accordance with ASTM B533-85. Table 4 also shows the Notched Izod Impact (NII) strength of the molded article prepared with the thermoplastic composition, in accordance with ISO 180/1A.

From the results, it was determined that the textures provided using the thermoplastic compositions of the disclosure provided a better metal-plastic interlocking and good peeling forces as compared to the comparative thermoplastic composition that did not include the specific SMA of the disclosure.

**Table 4: Average NII and Peel Strength value for the experimental formulations**

| **Sample #** | **Peel Strength (N/mm)** | **NII (kJ/m²)** |
|---|---|---|
| CE1 | 0.2 | 12.3 |
| CE2 | 0.4 | 10.5 |
| CE3 | 0.3 | 12.6 |
| E1 | 1.2 | 17.2 |
| E2 | 0.8 | 21.1 |
| E3 | 1.7 | 22.8 |
| E4 | 0.7 | 15.2 |
| E5 | 1.0 | 16.1 |
| E6 | 0.9 | 28.7 |
| E7 | 1.3 | 21.3 |
| E8 | 0.7 | 18.6 |
| E9 | 1.4 | 18.1 |
| E10 | 0.9 | 30.2 |
| E11 | 1.3 | 20.6 |

It will be understood that for the purposes of this disclosure that "at least one of X, Y, and Z" can be construed as X only, Y only, Z only, or any combination of two or more items X, Y, and Z (e.g., XYZ, XY, XZ, YZ). Furthermore, it will be understood that for the purposes of this disclosure, "X, Y, and/or Z" can be construed as X only, Y only, Z only, or any combination of two or more items X, Y, and Z (e.g., XYZ, XY, XZ, YZ).

Furthermore, it will be understood that for the purposes of this disclosure that where a range of numerical values is recited herein, comprising upper and lower values, unless otherwise stated in specific circumstances, the range is intended to include the endpoints thereof, and all integers and fractions within the range. It is not intended that the scope of the invention be limited to the specific values recited when defining a range. Further, when an amount, concentration, or other value or parameter is given as a range, one or more preferred ranges or a list of upper preferable values and lower preferable values, this is to be understood as specifically disclosing all ranges formed from any pair of any upper range limit or preferred value and any lower range limit or preferred value, regardless of whether such pairs are separately disclosed.

The embodiments and examples described herein are exemplary only, and are not intended to be limiting.

## Claims

1. A thermoplastic composition comprising:
a first copolymer in an amount from 30% - 80% by weight of the composition, preferably from 45% - 75% by weight of the composition, wherein the first copolymer comprises polymeric units derived from a vinyl aromatic monomer and a vinyl nitrile monomer;
a rubber modified polymer in an amount of 18% - 50% by weight of the composition, preferably from 30% - 45% by weight of the composition, wherein the rubber modified polymer comprises a polymeric rubber with polymeric units derived from a conjugated diene and a grafted thermoplastic copolymer grafted to the polymeric rubber; and
a styrene maleic anhydride (SMA) copolymer in an amount from 2% - 15 % by weight of the composition,
wherein the SMA copolymer comprises a maleic anhydride content in an amount from 10% - 30% by weight of the SMA copolymer, preferably from 12% - 25% by weight of the SMA copolymer, more preferably from 15% - 20% by weight of the SMA copolymer, and
wherein the SMA copolymer comprises a weight average molecular weight from 5,000 g/mol to 30,000 g/mol, preferably from 10,000 g/mol to 25,000 g/mol, more preferably from 15,000 g/mol to 20,000 g/mol, when measured in accordance with gel permeation chromatography in accordance with ASTM D5296-11 using polystyrene based calibration with tetrahydrofuran (THF) as solvent.

2. The thermoplastic composition of claim 1, wherein the vinyl aromatic monomer comprises at least one of styrene, α-methyl styrene, dibromostyrene, vinyltoluene, vinylxylene, butylstyrene, p-hydroxystyrene, and methoxystyrene, preferably the vinyl aromatic monomer is styrene, and the vinyl nitrile monomer comprises at least one of acrylonitrile, chloroacrylonitrile, methacrylonitrile, and ethacrylonitrile, preferably the vinyl nitrile monomer is acrylonitrile.

3. The thermoplastic composition of claim 1 or 2, wherein:
(i) the conjugated diene comprises at least one of 1,3-butadiene, isoprene, 1,3-heptadiene, methyl-1,3-pentadiene, 2,3-dimethyl-1,3-butadiene, 2-ethyl-1,3-pentadiene, 1,3-hexadiene, and 2,4-hexadiene, preferably 1,3-butadiene; and
(ii) the grafting thermoplastic copolymer comprises polymeric units derived from at least one of a vinyl aromatic monomer, preferably styrene, and a vinyl nitrile monomer, preferably acrylonitrile.

4. The thermoplastic composition of any one of claims 1 to 3, wherein the first copolymer comprises a styrene-acrylonitrile copolymer (SAN) and the rubber modified polymer comprises a SAN grafted butadiene rubber.

5. The thermoplastic composition according to any one of claims 1-4, further comprising:
an ethylene acrylic acid (EAA) copolymer in an amount from 2% - 10% by weight of the composition, wherein the EAA copolymer comprises acrylic acid content in an amount from 1% - 10% by weight of the EAA copolymer, preferably from 5% - 7% by weight of the EAA copolymer.

6. The thermoplastic composition according to any one of claims 1 to 5, further comprising:
one or more further components in an amount from 0% - 5% by weight of the composition.

7. The thermoplastic composition according to claim 6, wherein the one or more further components in the thermoplastic composition are selected from the group consisting of an impact modifier, a flow modifier, a reinforcing agent, an antioxidant, a heat stabilizer, a light stabilizer, an ultraviolet light stabilizer, an ultraviolet absorbing additive, a plasticizer, a lubricant, a releasing agent, an antistatic agent, melt processing additive, and any combination thereof.

8. The thermoplastic composition according to claim 6, wherein the one or more further components comprises at least one of magnesium oxide (MgO), silicone fluid, ethylene bis stearamide (EBX) wax, and magnesium stearate.

9. The thermoplastic composition of any one of claims 1 to 8, having a Notched Izod Impact strength of 3.0 kJ/m² to 30.0 kJ/m², preferably 4.0 kJ/m² to 25.0 kJ/m², more preferably 5.0 kJ/m² to 20.0 kJ/m², when measured in accordance with ISO 180/1A.

10. A metal plated molded article comprising the thermoplastic composition of any one of claims 1 to 9, wherein the surface of the molded article is at least partially or preferably totally coated with one or more metal layers.

11. An electroplating process comprising:
molding a thermoplastic composition of any one of claims 1 to 9 into a molded article;
optionally cleaning and/or rinsing the molded article;
contacting a surface of the molded article with a chemical agent to form a surface treated article; and
subjecting the surface treated article to conditions suitable to adhere one or more metal layers to at least a portion of a surface of the surface treated article to produce a metal plated molded article.

12. The electroplating process according to claim 11, wherein the chemical agent comprises a suspension of manganese oxide colloidal particles in a mineral acid mixture comprising sulfuric acid and/or phosphoric acid.

13. The electroplating process of claim 11 or claim 12, wherein the one or more metal layers are selected from the group consisting of copper, nickel, and chromium, preferably nickel.

14. The electroplating process of any one of claims 11-13, wherein the metal plated molded article comprises a peel strength determined in accordance with ASTM B533-85 of greater than 0.4 N/mm.

15. A metal plated article comprising:
a metal layer;
a thermoplastic article formed by the thermoplastic composition of claim 1, wherein the metal layer is adhered onto at least a portion of a surface of the thermoplastic article, optionally wherein the metal plated article comprises an automotive or electrical part.

## Patentansprüche

1. Thermoplastische Zusammensetzung umfassend:
ein erstes Copolymer in einer Menge von 30 Gew.-% bis 80 Gew.-% der Zusammensetzung, vorzugsweise von 45 Gew.-% bis 75 Gew.-% der Zusammensetzung, wobei das erste Copolymer Polymereinheiten abgeleitet von einem vinylaromatischen Monomer und einem Vinylnitrilmonomer umfasst;
ein kautschukmodifiziertes Polymer in einer Menge von 18 Gew.-% bis 50 Gew.-% der Zusammensetzung, vorzugsweise von 30 Gew.-% bis 45 Gew.-% der Zusammensetzung, wobei das kautschukmodifizierte Polymer einen polymeren Kautschuk mit von einem konjugierten Dien abgeleiteten Polymereinheiten und ein gepfropftes thermoplastisches Copolymer, das auf den polymeren Kautschuk gepfropft ist, umfasst; und
ein Styrol-Maleinsäureanhydrid(SMA)-Copolymer in einer Menge von 2 Gew.-% bis 15 Gew.-% der Zusammensetzung,
wobei das SMA-Copolymer einen Maleinsäureanhydridgehalt in einer Menge von 10 Gew.-% bis 30 Gew.-% des SMA-Copolymers, vorzugsweise von 12 Gew.-% bis 25 Gew.-% des SMA-Copolymers, bevorzugter von 15 Gew.-% bis 20 Gew.-% des SMA-Copolymers, umfasst und
wobei das SMA-Copolymer ein gewichtsgemitteltes Molekulargewicht von 5.000 g/mol bis 30.000 g/mol, vorzugsweise von 10.000 g/mol bis 25.000 g/mol, bevorzugter von 15.000 g/mol bis 20.000 g/mol, umfasst, gemessen durch Gelpermeationschromatographie nach ASTM D5296-11 unter Verwendung von Kalibrierung auf Polystyrolbasis mit Tetrahydrofuran (THF) als Lösungsmittel.

2. Thermoplastische Zusammensetzung nach Anspruch 1, wobei das vinylaromatische Monomer wenigstens eines von Styrol, α-Methylstyrol, Dibromstyrol, Vinyltoluol, Vinylxylen, Butylstyrol, p-Hydroxystyrol und Methoxystyrol umfasst, wobei das vinylaromatische Monomer vorzugsweise Styrol ist und das Vinylnitrilmonomer aus wenigstens einem von Acrylnitril, Chloracrylnitril, Methacrylnitril und Ethacrylnitril besteht, wobei das Vinylnitrilmonomer vorzugsweise Acrylnitril ist.

3. Thermoplastische Zusammensetzung nach Anspruch 1 oder 2, wobei:
(i) das konjugierte Dien wenigstens eines von 1,3-Butadien, Isopren, 1,3-Heptadien, Methyl-1,3-pentadien, 2,3-Dimethyl-1,3-butadien, 2-Ethyl-1,3-pentadien, 1,3-Hexadien und 2,4-Hexadien, vorzugsweise 1,3-Butadien, umfasst; und
(ii) das pfropfende thermoplastische Copolymer Polymereinheiten abgeleitet von wenigstens einem von einem vinylaromatischen Monomer, vorzugsweise Styrol, und einem Vinylnitrilmonomer, vorzugsweise Acrylnitril, umfasst.

4. Thermoplastische Zusammensetzung nach einem der Ansprüche 1 bis 3, wobei das erste Copolymer ein Styrol-Acrylnitril-Copolymer (SAN) umfasst und das kautschukmodifizierte Polymer einen SAN-gepfropften Butadienkautschuk umfasst.

5. Thermoplastische Zusammensetzung nach einem der Ansprüche 1-4, ferner umfassend:
ein Ethylen-Acrylsäure(EAA)-Copolymer in einer Menge von 2 Gew.-% bis 10 Gew.-% der Zusammensetzung, wobei das EAA-Copolymer Acrylsäuregehalt in einer Menge von 1 Gew.-% bis 10 Gew.-% des EAA-Copolymers, vorzugsweise von 5 Gew.-% bis 7 Gew.-% des EAA-Copolymers, umfasst.

6. Thermoplastische Zusammensetzung nach einem der Ansprüche 1 bis 5, ferner umfassend:
eine oder mehrere weitere Komponenten in einer Menge von 0 Gew.-% bis 5 Gew.-% der Zusammensetzung.

7. Thermoplastische Zusammensetzung nach Anspruch 6, wobei die eine oder mehreren weiteren Komponenten in der thermoplastischen Zusammensetzung ausgewählt sind aus der Gruppe bestehend aus einem Schlagzähmodifikator, einem Fließmodifikator, einem Verstärkungsmittel, einem Antioxidationsmittel, einem Wärmestabilisator, einen Lichtstabilisator, einen Ultraviolettlichtstabilisator, einem ultraviolettabsorbierenden Zusatzstoff, einem Weichmacher, einem Schmiermittel, einem Trennmittel, einem antistatischen Mittel, einem Schmelzverarbeitungs-Zusatzstoff und einer beliebigen Kombination davon.

8. Thermoplastische Zusammensetzung nach Anspruch 6, wobei die eine oder mehreren weiteren Komponenten wenigstens eines von Magnesiumoxid (MgO), Siliconfluid, Ethylenbisstearamid(EBX)-Wachs und Magnesiumstearat umfassen.

9. Thermoplastische Zusammensetzung nach einem der Ansprüche 1 bis 8 mit einer Izod-Kerbschlagzähigkeit von 3,0 kJ/m² bis 30,0 kJ/m², vorzugsweise 4,0 kJ/m² bis 25,0 kJ/m², bevorzugter 5,0 kJ/m² bis 20,0 kJ/m², gemessen nach ISO 180/1A.

10. Metallplattierter Formkörper umfassend die thermoplastische Zusammensetzung nach einem der Ansprüche 1 bis 9, wobei die Oberfläche des Formkörpers wenigstens zum Teil oder vorzugsweise vollständig mit einer oder mehreren Metallschichten beschichtet ist.

11. Elektroplattierungsverfahren umfassend:
Formen einer thermoplastischen Zusammensetzung nach einem der Ansprüche 1 bis 9 zu einem Formkörper;
gegebenenfalls Reinigen und/oder Spülen des Formkörpers;
Inkontaktbringen einer Oberfläche des Formkörpers mit einem chemischen Mittel, um einen oberflächenbehandelten Gegenstand zu bilden; und
Unterwerfen des oberflächenbehandelten Gegenstands an Bedingungen, die geeignet sind, eine oder mehrere Metallschichten an wenigstens einen Teil einer Oberfläche des oberflächenbehandelten Gegenstands zu haften, um einen metallplattierten Formkörper zu erzeugen.

12. Elektroplattierungsverfahren nach Anspruch 11, wobei das chemische Mittel eine Suspension von kolloidalen Manganoxidpartikeln in einem Mineralsäuregemisch umfassend Schwefelsäure und/oder Phosphorsäure umfasst.

13. Elektroplattierungsverfahren nach Anspruch 11 oder Anspruch 12, wobei die eine oder mehreren Metallschichten ausgewählt sind aus der Gruppe bestehend aus Kupfer, Nickel und Chrom, vorzugsweise Nickel.

14. Elektroplattierungsverfahren nach einem der Ansprüche 11-13, wobei der metallplattierte Formkörper eine Schälfestigkeit, bestimmt nach ASTM B533-85, von mehr als 0,4 N/mm umfasst.

15. Metallplattierter Gegenstand umfassend:
eine Metallschicht;
einen thermoplastischen Gegenstand, gebildet aus der thermoplastischen Zusammensetzung nach Anspruch 1, wobei die Metallschicht auf wenigstens einen Teil einer Oberfläche des thermoplastischen Gegenstands gehaftet ist, wobei der metallplattierte Gegenstand gegebenenfalls ein Automobil- oder Elektroteil umfasst.

## Revendications

1. Composition thermoplastique comprenant :
un premier copolymère en une quantité de 30 % à 80 % en poids de la composition, de préférence de 45 % à 75 % en poids de la composition, le premier copolymère comprenant des motifs polymériques dérivés d'un monomère vinylaromatique et d'un monomère de nitrile vinylique ;
un polymère modifié par caoutchouc en une quantité de 18 % à 50 % en poids de la composition, de préférence de 30 % à 45 % en poids de la composition, dans laquelle le polymère modifié par caoutchouc comprend un caoutchouc polymérique comportant des motifs polymériques dérivés d'un diène conjugué et un copolymère thermoplastique greffé au caoutchouc polymérique ; et
un copolymère de styrène anhydride maléique (SMA) en une quantité de 2 % à 15 % en poids de la composition,
dans laquelle le copolymère SMA comprend une teneur en anhydride maléique en une quantité de 10 % à 30 % en poids du copolymère SMA, de préférence de 12 % à 25 % en poids du copolymère SMA, plus préférablement de 15 % à 20 % en poids du copolymère SMA, et
dans laquelle le copolymère SMA comprend un poids moléculaire moyen en poids de 5 000 g/mole à 30 000 g/mole, de préférence de 10 000 g/mole à 25 000 g/mole, plus préférablement de 15 000 g/mole à 20 000 g/mole, lorsqu'il est mesuré conformément à une chromatographie à perméation de gel selon la norme ASTM D5296-11 en utilisant un étalonnage à base de polystyrène avec du tétrahydrofurane (THF) comme solvant.

2. Composition thermoplastique selon la revendication 1, dans laquelle le monomère vinylaromatique comprend au moins l'un parmi le styrène, l'α-méthylstyrène, un dibromostyrène, un vinyltoluène, un vinylxylène, un butylstyrène, le p-hydroxystyrène et un méthoxystyrène, de préférence le monomère aromatique vinylique est le styrène, et le monomère de nitrile vinylique comprend au moins l'un parmi l'acrylonitrile, le chloroacrylonitrile, le méthacrylonitrile et l'éthacrylonitrile, de préférence le monomère de nitrile vinylique est l'acrylonitrile.

3. Composition thermoplastique selon la revendication 1 ou 2 dans laquelle :
(i) le diène conjugué comprend au moins l'un parmi le 1,3-butadiène, l'isoprène, le 1,3-heptadiène, le méthyl-1,3-pentadiène, le 2,3-diméthyl-1,3-butadiène, le 2-éthyl-1,3-pentadiène, le 1,3-hexadiène et le 2,4-hexadiène, de préférence le 1,3-butadiène ; et
(ii) le copolymère thermoplastique de greffage comprend des motifs polymériques dérivés d'au moins un monomère vinylaromatique, de préférence le styrène, et d'un monomère de nitrile vinylique, de préférence l'acrylonitrile.

4. Composition thermoplastique selon l'une quelconque des revendications 1 à 3, dans laquelle le premier copolymère comprend un copolymère de styrène-acrylonitrile (SAN) et le polymère modifié par caoutchouc comprend un caoutchouc butadiène greffé par SAN.

5. Composition thermoplastique selon l'une quelconque des revendications 1 à 4, comprenant en outre :
un copolymère éthylène-acide acrylique (EAA) en une quantité de 2 % à 10 % en poids de la composition, dans laquelle le copolymère EAA comprend une teneur en acide acrylique en une quantité de 1 % à 10 % en poids du copolymère EAA, de préférence de 5 % à 7 % en poids du copolymère EAA.

6. Composition thermoplastique selon l'une quelconque des revendications 1 à 5, comprenant en outre :
un ou plusieurs autres composants en une quantité de 0 % à 5 % en poids de la composition.

7. Composition thermoplastique selon la revendication 6, dans laquelle le ou les autres composants dans la composition thermoplastique sont choisis dans le groupe constitué par un modificateur de résistance aux chocs, un modificateur de fluidité, un agent de renforcement, un antioxydant, un stabilisant thermique, un photostabilisant, un stabilisant à la lumière ultraviolette, un additif d'absorption des ultraviolets, un plastifiant, un lubrifiant, un agent de démoulage, un agent antistatique, un additif de traitement en fusion et toute combinaison de ceux-ci.

8. Composition thermoplastique selon la revendication 6, dans laquelle le ou les autres composants comprennent au moins l'un parmi l'oxyde de magnésium (MgO), un fluide de silicone, une cire de bis-stéaramide d'éthylène (EBX) et le stéarate de magnésium.

9. Composition thermoplastique selon l'une quelconque des revendications 1 à 8, ayant une résistance aux chocs Izod entaillée de 3,0 kJ/m² à 30,0 kJ/m², de préférence de 4,0 kJ/m² à 25,0 kJ/m², plus préférablement de 5,0 kJ/m² à 20,0 kJ/m², lorsqu'elle est mesurée conformément à la norme ISO 180/1A.

10. Article moulé plaqué par un métal comprenant la composition thermoplastique selon l'une quelconque des revendications 1 à 9, dans lequel la surface de l'article moulé est au moins partiellement ou de préférence totalement revêtue par une ou plusieurs couches métalliques.

11. Procédé d'électrodéposition comprenant :
un moulage d'une composition thermoplastique selon l'une quelconque des revendications 1 à 9 en un article moulé ;
éventuellement un nettoyage et/ou un rinçage de l'article moulé ;
la mise en contact d'une surface de l'article moulé avec un agent chimique pour former un article traité en surface ; et
la soumission de l'article traité en surface à des conditions appropriées pour faire adhérer une ou plusieurs couches métalliques à au moins une partie d'une surface de l'article traité en surface afin de produire un article moulé plaqué par un métal.

12. Procédé d'électrodéposition selon la revendication 11, dans lequel l'agent chimique comprend une suspension de particules colloïdales d'oxyde de manganèse dans un mélange d'acides minéraux comprenant de l'acide sulfurique et/ou de l'acide phosphorique.

13. Procédé d'électrodéposition selon la revendication 11 ou la revendication 12, dans lequel la ou les couches métalliques sont choisies dans le groupe constitué par le cuivre, le nickel et le chrome, de préférence le nickel.

14. Procédé d'électrodéposition selon l'une quelconque des revendications 11 à 13, dans lequel l'article moulé plaqué par un métal comprend une résistance au pelage déterminée conformément à la norme ASTM B533-85 supérieure à 0,4 N/mm.

15. Article plaqué par un métal comprenant :
une couche métallique ;
un article thermoplastique formé par la composition thermoplastique selon la revendication 1, dans lequel la couche métallique est collée sur au moins une partie d'une surface de l'article thermoplastique, éventuellement dans lequel l'article plaqué par un métal comprend une pièce automobile ou électrique.
